Europäisches Patentamt

(19) European Patent Office

Office européen des brevets

(11) Publication number: **0 033 526**
**B1**

(12) # EUROPEAN PATENT SPECIFICATION

(45) Date of publication of patent specification: **29.02.84**

(51) Int. Cl.³: **B 27 B 5/06**

(21) Application number: **81100687.3**

(22) Date of filing: **30.01.81**

(54) Lifting table.

(30) Priority: **31.01.80 IT 1243180**

(43) Date of publication of application:
**12.08.81 Bulletin 81/32**

(45) Publication of the grant of the patent:
**29.02.84 Bulletin 84/9**

(84) Designated Contracting States:
**AT BE CH DE FR GB LI LU NL SE**

(56) References cited:
**DE - B - 1 933 067**

**FERTIGUNGSTECHNIK, No. 11, 1977, H. FUNKE**
**"Die Auswahl des geeigneten Maschinentyps**
**sollte von der Kapazitätsanforderung abhängig**
**sein" pages 57 to 65**

(73) Proprietor: **GIBEN IMPIANTI S.p.A.**
**24, Via Garganelli**
**I-40065 Pianoro (Bologna) (IT)**

(72) Inventor: **Benuzzi, Gino**
**5, Via Angelo Custode**
**I-40141 Bologna (IT)**

(74) Representative: **Porsia, Dino, Dr.**
**c/o Succ. Ing. Fischetti & Weber Via Caffaro 3**
**I-16124 Genova (IT)**

Courier Press, Leamington Spa, England.

Lifting table

The present invention relates to a lifting table of the type used for the feeding of panels of wood or the like to a machining line, where the panels are cut to the desired size.

In the panel cutting plants, the panels are fed in stacks to a lifting table, which is cyclically lifted by predetermined amounts, so as to bring a predetermined number of stacked panels in correspondence with a workpiece support surface of the machining line. At this point, there is promoted the intervention of a pusher bar which pushes the predetermined stack of panels onto the workpiece support surface. The cycle is then repeated, until the lifting table reaches with its supporting surface the said workpiece support surface, and the stack is completely exhausted. The lifting table is then lowered to a loading position where again a new stack of panels is loaded thereon.

The lifting table is usually formed with a roller runway surface, so that the panel stack which is fed from suitable feeding runways can be moved on the lifting table itself to a correct position with respect to the inlet of the machining line.

A lifting table of the above mentioned type is known, for example, from the article published in "Fertigungstechnik, No. 11, 1977, page 59).

Normally, in order to promote the shifting of the panel stack on the lifting table, some of the rollers of the said roller runway are motorized.

Usually, the lifting tables present a rectangular surface, and they are coupled to the inlet section of the machining line either with one of the longer sides or with one of the shorter sides, depending upon the size of the panels being machined, and/or on the particular characteristic features of the machining line associated with the lifting table, and/or the actual space availability of the place where the machining line is installed, at the interior of a factory.

Therefore, if it is requested to modify the orientation of the rectangular lifting table of 90°, it is necessary to have another lifting table, constructed precisely for this purpose.

According to DE-B-1 933 067 there is provided a roller runway comprising a plurality of modular units each presenting in plan view a square shape and accommodating one freely rotatable roller, and which can be secured onto suitable supporting bars according to at least two positions which are angularly rotated of 90°. However, according to the said DE-B-1 933 067, particular clamps or fastening means must be used in order to secure each modular unit on the supporting bar, which complicates the construction of the roller runway and its adaptation to the particular requirements.

According to the present invention, there is provided a lifting table of the type in which the roller runway comprises a plurality of modular units, each presenting in plan view a square shape and accommodating at least two freely rotatable rollers arranged with their rotational axes parallel to each other, the said modular units being insertable, into corresponding seats provided on the table, according to at least two positions which are angularly rotated of 90°. The characterizing feature resides in the fact that each modular unit consists of a square-shaped roller-carrying frame which presents on its four sides four outwardly projecting side flanges, by means of which it bears onto horizontal, equispaced and parallel supporting bars, said supporting bars being mounted on a frame which constitutes the frame of the lifting table.

Onto a fixed structure arranged below the lifting table there is mounted, in correspondence of a hollow space obtained in the said table by removal of at least one roller-carrying frame, a motorized shifting unit consisting of at least one shifting wheel and a motor for driving same into rotation. The shifting wheel has its rotational axis parallel to the rotational axes of the runway rollers and presents such a diameter that, in the lowered condition of the lifting table, it projects with a peripheral portion upwardly through the said hollow space of the table, until it reaches the runway surface defined by the rollers.

The lifting table according to the invention is further characterized by that fact that it is vertically movable by means of a pair of rotatable vertical threaded shafts provided in correspondence of the ends of one side of its frame, and which are caused to rotate in synchronism, on said threaded shafts there being operatively mounted a pair of screw nuts connected to the table frame, while in correspondence of each one of the sides of the table frame, which are perpendicular to the side between the two vertical threaded shafts, there is arranged a suspension sprocket chain which is anchored by one end to a lower anchoring point next to the lowered position of the lifting table and by its other end it is anchored to an upper anchoring point next to the lifted position of the lifting table. The anchoring points of the said suspension chain are arranged at opposite sides of the table, and the said suspension chain is passed over a lateral sprocket wheel rotatably mounted on the table near to the side of the lower anchoring point, and is also passed under a lateral sprocket wheel rotatably mounted on the table near to the side of the upper anchoring point.

The above features and advantages of the lifting table according to the invention will appear evident from the following detailed description of some preferred embodiments of same, made with reference to the attached drawings, in which:

Figure 1 shows the lifting table according to the invention, in side elevation and with parts in section;

Figure 2 is a top plan view, with parts in section, of the supporting frame of the lifting table;

Figure 3 is a diagrammatic perspective view of a modular unit forming the roller runway surface of the table;

Figure 4 is a section along line IV—IV of Figure 3;

Figure 5 is a diagrammatic perspective view of a motorized feeding unit adapted to be used with the lifting table according to the invention;

Figures 6 and 7 are diagrammatic top plan views illustrating two different possibilities of adaptation of the lifting table according to the invention.

Figure 8 is a diagrammatic side section, along line VIII—VIII of Figure 6, showing the table during the loading phase.

Figure 9 is a diagrammatic top plan view of a modification of the lifting table according to the invention.

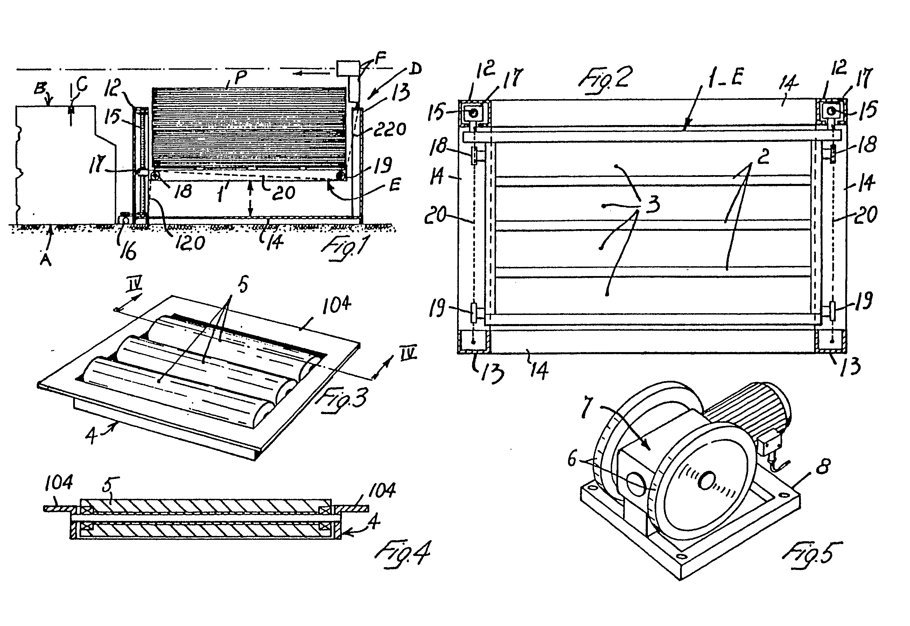

With reference to Figure 1, letter A indicates the inlet section of a machining line and letter B indicates the workpiece support onto which there must be transferred the panels or stacks of panels P which must be cut to size by cutting means such as saws, operating in the zone indicated by reference letter C. In proximity of the inlet section A of the machining line there is arranged the apparatus for the automatic loading of the panels, indicated by reference letter D. Onto the lifting table E, which presents a horizontal loading surface and is vertically movable, of the said automatic loading apparatus D, there must be cyclically loaded a stack of panels P. Reference letter F indicates the pusher bar which, after the lifting by a predetermined amount of the lifting table E, moves in the direction of the workpiece support B of the machining line and transfers a predetermined number of stacked panels P (or even a single panel) onto the said workpiece support B.

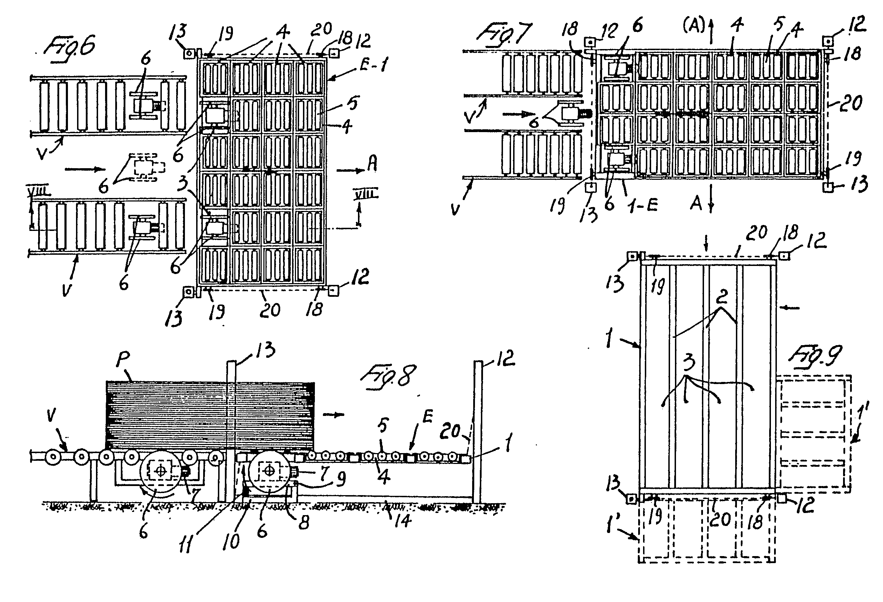

The panel supporting surface or upper surface of the lifting table E is constructed as a roller runway surface. With particular reference to Figure 2, the lifting table E consists of a strong rectangular frame 1 which is subdivided by parallel and co-planar supporting bars 2 equispaced between one another, into a suitable number of hollow spaces 3 presenting equal dimensions. Preferably, the length of the said hollow spaces 3 is a multiple of their width.

With reference to Figures 3 and 4, the roller runway surface of the lifting table is formed by a plurality of modular units 4, each consisting of a square-shaped roller-carrying frame of a size which can be inserted into the hollow space defined between the supporting bars 3, and presenting on its four sides four outwardly projecting side flanges 104. Just by way of example, the square-shaped frames of the modular units 4 can be constructed by using L-shaped bars, as it can be appreciated from Figure 4. At the interior of the frame of the modular units 4 there are mounted freely rotatable the rollers 5, in a suitable number (three in the illustrated example), with their rotational axes parallel to each other, and projecting with their cylindrical surface of a suitable and predetermined amount above the upper surface defined by the side flanges 104 of the said modular units 4.

The modular units 4 are inserted in the hollow spaces of the frame 1 and bear with their side flanges 104 on the supporting bars 2 and on the frame sides. Of course, the width of the side flanges 104 and of the supporting bars 2 is calculated in such a manner as to avoid any superposition of the said side flanges 104 the one above the other, while guaranteeing a precise fitting of the modular units 4 in the hollow spaces 3 of the frame 1. In this manner, there can be obtained, thanks to the square shape of the modular units 4, a roller runway surface with the rollers arranged either as shown in Figure 6 or in Figure 7, i.e. rotated of 90°, depending upon the particular requirements of the machining line being served, as it clearly appears by looking at the above mentioned Figures 6 and 7, so that the runways V for feeding the panels P to the lifting table terminate either in correspondence of the larger side or of the smaller side of the said lifting table. The modular units 4 can be secured to the frame 1 and supporting bars 2 by any suitable means.

With particular reference to Figures 5, 6, 7 and 8, there is shown a shifting device for promoting the movement of the panels from the feeding runways V onto the lifting table E, and along the lifting table E itself.

In correspondence of the side of the frame 1 of the lifting table E, through which the panels pass onto the said lifting table from the runways V, parts of the hollow space 3 are left free, i.e. unoccupied by the modular units 4, thus leaving an open square space corresponding precisely to the square shape of a modular unit. Below said open space, on the ground or on the base structure of the lifting table, there is secured a carrier frame 8 onto which there is mounted a motor and reduction unit 7, the shaft of the said reduction unit being parallel to the rotational axis of the rollers 5 of the lifting table, and carrying keyed at its opposite ends a pair of wheels 6. The wheels 6 are of equal diameter, and are preferably lined on their peripheral surface with any suitable friction material, such as rubber.

Whenever the lifting table E is in its lowered condition, as shown in Figure 8, the wheels 6 are tangent to the runway surface formed by the rollers 5 and are therefore capable of engaging the bottom of the stack of panels P coming from the feeding runways V. By driving into rotation the said wheels 6 through the motor unit 7, the stack of panels P can be easily moved along the surface of the lifting table E, to the desired position.

The motorized shifting unit comprising the shifting wheels 6 and the motor and reduction unit 7, as above described, can be mounted also in correspondence of the terminal portions of the feeding runways V, as it clearly appears in Figures 6, 7 and 8.

In the embodiment shown in Figure 8, the carrier frame 8 which carries the shifting wheels 6 and the motor and reduction unit 7 can be swingably mounted around a fulcrum axis 9 onto a fixed structure 10 secured to the ground or to the base structure of the lifting table, while elastic means, such as pressure springs 11, can be provided to elastically urge upwardly the carrier frame 8 and consequently the shifting wheels 6, so as to ensure a greater adherence of the said wheels against the bottom of the panel stack to be shifted.

With reference to Figure 9, it is to be noted that, in order to increase the surface of the lifting table, to the frame 1 of the said lifting table there can be attached in an overhanging manner and removably, small additional frames 1' which are also adapted to receive the modular units 4.

With particular reference to Figures 1 and 2, there is shown a constructive improvement relating to the means for the support and the vertical movement of the lifting table E. In correspondence of the four corner zones of the frame 1 of the table there are arranged four upright columns 12-13 which are connected by means of bottom traverse bars 14. At the interior of the two upright columns 12, which are the ones adjacent to the inlet section A of the machining line, there are mounted rotatable around their longitudinal axis the threaded shafts 15, connected to each other for rotation and which can be rotated by means of a motor and reductor unit 16 centrally arranged.

The threaded shafts 15 are operatively connected with screw nuts 17 which are integral to the corner zones of the frame 1 next to the upright columns 12. On the sides of the frame 1 between the uprights 12-13 and in correspondence of the ends of the said sides, there are mounted freely rotatable the sprocket wheels 18, 19. At the top end of each upright column 13 there is anchored the end of a sprocket chain 20, which is passed under the sprocket wheel 19 and over the sprocket wheel 18 and it is finally anchored by its other end to the bottom of the opposed upright column 12. By looking at Figure 1, it appears evident that to a lifting or lowering movement of the table E, promoted by the symultaneous rotation of the threaded shafts 15 cooperating with the screw nuts 17, there corresponds respectively a lengthening of the section 120 of the chain between the sprocket wheel 18 and the lower anchoring point of the chain, and also there corresponds respectively an equal and contrary shortening and lengthening of the opposed section 220 of the chain between the sprocket wheel 19 and the upper anchoring point of the chain.

The lifting table E is therefore well supported and it can be moved vertically under the action of just two threaded shaft and screw nut assemblies.

## Claims

1. A lifting table provided with a roller runway surface, particularly adapted for the feeding of panels to a machining line, of the type in which the roller runway comprises a plurality of modular units (4), each presenting in plan view a square shape and accommodating at least two freely rotatable rollers (5) arranged with their rotational axes parallel to each other, the said modular units (4) being insertable, into corresponding seats provided on the table, according to at least two positions which are angularly rotated of 90° characterized by the fact that each modular unit consists of a square-shaped roller-carrying frame (4) which presents on its four sides four outwardly projecting side flanges (104), by means of which it bears onto horizontal, equispaced and parallel supporting bars (2) said supporting bars being mounted on a frame (1) which constitutes the frame of the lifting table.

2. A lifting table according to claim 1 characterized by the fact that onto a fixed structure (14) arranged below the lifting table (E), there is mounted, in correspondence of a hollow space obtained in the said table by removal of at least one roller-carrying frame (4), a motorized shifting unit consisting of at least one shifting wheel (6) and a motor (7) for driving same into rotation, said shifting wheel having its rotational axis parallel to the rotational axes of the runway rollers (5), and presenting such a diameter that, in the lowered condition, of the lifting table (E), it projects with a peripheral portion upwardly through the said hollow space of the table, until it reaches the runway surface defined by the rollers.

3. A lifting table according to claim 2, characterized by the fact that the motorized shifting unit comprises a carrier frame (8) which carries the shifting wheel (6) and the motor (7) for driving same into rotation, said carrier frame being swingably fulcrumed onto a supporting structure (10) around an axis (9) parallel to the rotational axis of the shifting wheel, pressure spring means (11) being inserted between the swinging carrier frame (8) and the underlying supporting structure (10).

4. A lifting table according to any one of the preceding claims 1 and 2, characterized by that fact that it is vertically movable by means of a pair of rotatable vertical threaded shafts (15) provided in correspondence of the ends of one side of the frame (1) of the table (E), and which are caused to rotate in synchronism, on said threaded shafts there being operatively mounted a pair of screw nuts (17) connected to the table frame, while in correspondence of each one of the sides of the table frame, which are perpendicular to the side between the two vertical threaded shafts (15), there is arranged a suspension sprocket chain (20) which is anchored by one end (120) to a lower anchoring point next to the lowered position of the lifting table (E) and by its other end (220) it is anchored to an upper anchoring point next to the lifted position of the lifting table (E), the anchoring points of the said suspension chain being arranged at opposite sides of the table, the said suspension chain being passed over a lateral sprocket wheel (18) rotatably mounted on the table near to the side of the lower anchoring point, and being also passed under a lateral sprocket wheel (19) rotatably mounted on the table near to the side of the upper anchoring point.

## Revendications

1. Une table de levage munie d'une surface de chemin de roulement à rouleaux, spécialement adaptée pour amener des panneaux sur une ligne d'usinage, du type dans lequel le chemin de roulement à rouleaux comprend un ensemble d'éléments modulaires (4), chacun présentant une forme carrée, en vue en plan, et recevant au moins deux rouleaux (5) qui peuvent tourner librement et qui sont disposés avec leurs axes de rotation mutuellement parallèles, ces éléments modulaires (4) pouvant être insérés dans des sièges correspondants formés dans la table, selon au moins deux positions qui correspondent à une rotation de 90°, caractérisée par le fait que chaque élément modulaire consiste en un cadre porte-rouleaux (4) de forme carrée qui présente sur ses quatre côtés quatre rebords latéraux (104) faisant saillie vers l'extérieur, au moyen desquels il repose sur des barres de support (2) horizontales, parallèles et équidistantes, ces barres de support étant montées sur un châssis (1) qui constitue le châssis de la table de levage.

2. Une table de levage selon la revendication 1, caractérisée par le fait qu'un dispositif de déplacement à moteur formé par au moins une roue de déplacement (6) et un moteur (7) pour entraîner cette dernière en rotation, est monté sur une structure fixe (14) placée sous la table de levage (E), en correspondance avec un espace vide obtenu dans la table par l'enlèvement d'au moins un cadre porterouleaux (4), et cette roue de déplacement a son axe de rotation parallèle aux axes de rotation des rouleaux (5) du chemin de roulement, et elle a un diamètre tel que, dans l'état baissé de la table de levage (E), une partie périphérique de cette roue fait saillie vers le haut dans l'espace vide de la table, jusqu'à atteindre la surface de chemin de roulement qui est définie par les rouleaux.

3. Une table de levage selon la revendication 2, caractérisée par le fait que le dispositif de déplacement à moteur comprend un châssis de support (8) qui porte la roue de déplacement (6) et le moteur (7) destiné à faire tourner cette dernière, ce châssis de support est monté sur une structure de support (10) de façon à pouvoir pivoter autour d'une axe (9) parallèle à l'axe de rotation de la roue de déplacement, avec des moyens de pression à ressort (11) intercalés entre le châssis de support pivotant (8) et la structure de support (10) qui se trouve au-dessous.

4. Une table de levage selon l'une quelconque des revendications 1 et 2 précédentes, caractérisée par le fait qu'elle peut être déplacée verticalement au moyen d'une paire d'arbres filetés (15) verticaux et tournants qui sont placés en correspondance avec les extrémités d'un côté du châssis (1) de la table (E), et qui sont mis en rotation en synchronisme, une paire d'écrous (17) accouplés au châssis de la table étant montés de façon fonctionnelle sur ces arbres filetés, tandis qu'une chaîne de suspension (20) est placée en correspondance avec chacun des côtés du châssis de la table, qui sont perpendiculaires au côté situé entre les deux arbres filetés verticaux (15), et cette chaîne est ancrée par une extrémité (120) à un point d'ancrage inférieur proche de la position baissée de la table de levage (E), et elle est ancrée par son autre extrémité (220) à un point d'ancrage supérieur proche de la position levée de la table de levage (E), les points d'ancrage de la chaîne de suspension étant placés sur des côtés opposés de la table, et la chaîne de suspension passant sur une roue à chaîne latérale (18) qui est montée de façon tournante sur la table près du côté du point d'ancrage inférieur, et passant également sous une roue à chaîne latérale (19) qui est montée de façon tournante sur la table près du côté du point d'ancrage supérieur.

## Patentansprüche

1. Hubtisch mit einer Rollenlauffläche, insbesondere für die Zufuhr von Paneelen zu einer Bearbeitungsstraße, wobei die Rollenlauffläche mehrere modulare Einheiten (4) aufweist, deren jede in Draufsicht quadratische Form besitzt und wenigstens zwei frei drehbare, mit parallen Drehachsen angeordnete Rollen (5) enthält, welche modulare Einheiten (4) in zugehörige, am Tisch vorgesehene Aufnahmen in wenigstens zwei um 90° winkelversetzten Stellungen einsetzbar sind, dadurch gekennzeichnet, daß jede modulare Einheit aus einem quadratisch geformten Rollentragrahmen (4) besteht, der an seinen vier Seiten vier nach außen weisende Flansche (104) zeigt, mit denen er sich auf horizontalen, mit gleichen Abständen vorgesehenen, parallelen Trägern (2) abstützt, die an einem Rahmen (1) befestigt sind, welcher den Rahmen des Hubtisches bildet.

2. Hubtisch nach Anspruch 1, dadurch gekennzeichnet, daß auf einer unter dem Hubtisch (E) angeordneten, festen Tragkonstruktion (14) fluchtend mit einem im Tisch durch Entfernung wenigstens eines Rolltragrahmens erhaltenen Freiraum eine motorisierte Verschiebeeinheit montiert ist, die aus wenigstens einem Treibrad (6) und einem Motor (7) zu dessen drehenden Antrieb besteht, wobei das Treibrad mit parallel zu den Drehachsen der Rollen (5) der Lauffläche verlaufender Drehachse angeordnet ist und einen solchen Durchmesser aufweist, daß es in der abgesenkten Stellung des Hubtisches (E) mit einem Umfangsbereich durch den Freiraum des Tisches nach oben bis zu der durch die Rollen bestimmten Lauffläche ragt.

3. Hubtisch nach Anspruch 2, dadurch gekennzeichnet, daß die motorisierte Verschiebeeinheit einen das Treibrad (6) und den dieses drehend antreibenden Motor (7) tragenden Rahmen (8) aufweist, der auf einer Stützkonstruktion (10) um eine zur Drehachse des Treibrades parallele Achse schwenkbar lagert, wobei zwischen den schwenkbaren Tragrahmen (8) und die darunter leigende Stützkonstruktion Druckfedern (11) od.dgl. eingesetzt sind.

4. Hubtisch nach Anspruch 1 oder 2, dadurch gekennzeichnet, daß er mit Hilfe zweier drehbarer, vertikaler Gewindespindeln (15) vertikal verstellbar ist, die den Enden einer Seite des Rahmens (1) des Tisches (E) zugeordnet vorgesehen sind, die synchron in Drehung versetzt werden und auf denen zwei Schraubmuttern (17) geführt sind, die mit dem Tischrahmen verbunden sind, wogegen jeder der beiden Rahmenseiten, die normal zu der zwischen den vertikalen Gewindespindeln liegenden Seiten verlaufen, eine Aufhänge-(Laschen-) Kette (20) zugeordnet ist, die mit dem einen Ende (120) an einem unteren Verankerungspunkt im Bereich der abgesenkten Stellung des Hubtisches (E) und mit dem anderen Ende (220) an einem oberen Verankerungspunkt im Bereich der angehobenen Stellung des Hubtisches (E) verankert ist, wobei die Verankerungspunkte der Aufhängekette an entgegengesetzten Tischseiten vorgesehen sind und die Aufhängekette oben über ein Endumlenkkettenrad (18), das am Tisch im Bereich der dem unteren Verankerungspunkt zugeordneten Seite drehbar montiert ist, und unten um ein Endumlenkkettenrad (19) geführt ist, das am Tisch im Bereich der dem oberen Verankerungspunkt zugeordneten Seite drehbar montiert ist.

*F* *P* *D* *F* *13* *220* *12* *15* *B* *C* *17* *19* *18* *1'* *20* *E* *16* *12 0* *14* *Fig.1* *A*

*12* *17* *Fig.2* *1 - E* *14* *12* *17* *15* *15* *18* *2* *18* *14* *14* *3* *20* *20* *19* *19* *13* *14* *13*

*IV* *5* *104* *IV* *4* *Fig.3*

*104* *5* *104* *4* *Fig.4*

*7* *6* *8* *Fig.5*

0 033 526

Fig.6

Fig.7

Fig.8

Fig.9